# FASCICULE DE BREVET EUROPEEN

(11) **EP 2 303 485 B1**
(45) Date de publication et mention de la délivrance du brevet: **18.03.2015**
(21) Numéro de dépôt: 09750001.1
(22) Date de dépôt: 30.04.2009
(51) Int. Cl.: B21D 1/06, B21D 1/10

(54) **APPAREILLAGE POUR LE REDRESSEMENT D'ELEMENTS METALLIQUES DEFORMES A LA SUITE D'UNE CONTRAINTE MECANIQUE EXCESSIVE**
VORRICHTUNG ZUM GERADERICHTEN VON AUFGRUND ÜBERMÄSSIGER MECHANISCHER SPANNUNG VERFORMTEN METALLELEMENTEN
DEVICE FOR STRAIGHTENING DEFORMED METAL ELEMENTS AFTER UNDERGOING AN EXCESSIVE MECHANICAL STRESS

(30) Priorité: 05.05.2008 FR 0802465
(43) Date de publication de la demande: 06.04.2011
(73) Titulaire: Sarrion Sanchez, Christian, 91590 La Ferte Alais (FR)
(72) Inventeur: Sarrion Sanchez, Christian, 91590 La Ferte Alais (FR)
(74) Mandataire: Mazabraud, Xavier
(86) Numéro de dépôt international: PCT/FR2009/000519
(87) Numéro de publication internationale: WO 2009/141520

(56) Documents cités:
- EP-A- 1 201 328
- DE-A1- 1 452 569
- DE-A1- 10 052 364
- DE-A1- 19 646 101
- FR-A- 2 755 885
- US-A- 1 775 968
- US-A- 2 531 728
- US-A- 5 445 000
- US-A1- 2006 016 240

## Description

La présente invention concerne un appareillage pour le redressement d'éléments métalliques et/ou plastiques déformés, voire même endommagés, à la suite d'une contrainte mécanique excessive telle que, par exemple, un choc ,selon le préambule de la revendication 1. L'invention concerne aussi le procédé correspondant. Un tel appareil ainsi qu'un tel procédé sont par exemple décrits dans le document FR-A-2755885. Elle s'applique notamment, mais non exclusivement, au redressement d'un élément de la carrosserie d'un véhicule automobile déformé par exemple à la suite d'un accident.

D'une manière générale, on sait que pour effectuer un tel redressement, différentes solutions sont proposées à l'heure actuelle.

Ainsi, notamment, selon un processus couramment utilisé par les carrossiers, on met à nu une portion de la tôle déformée et on soude sur celle-ci des petites pastilles évidées sur un point de leur périphérie. On utilise alors un outil dont une extrémité en forme de crochet est engagée dans l'évidement d'une pastille. Cet outil est muni d'un marteau à coulisseau permettant de donner des coups sur l'extrémité de l'outil opposée au crochet, de manière à effectuer des impulsions de traction sur la tôle en vue de provoquer son redressement. Après avoir terminé le redressement, on élimine les pastilles grâce à l'outil, en effectuant une rotation, puis on enlève le point de soudure, par exemple, à l'aide d'un disque à ébarber, puis on mastique la tôle. Cette solution s'avère relativement longue et délicate à exécuter. En outre, elle conduit à réduire sensiblement l'épaisseur de la tôle et, par conséquent, de la fragiliser.

Dans le but de simplifier ce processus de redressage sans altérer les revêtements de la tôle tels que la peinture, l'apprêt, la galvanisation ou l'électrozingage, le Demandeur a proposé un procédé consistant à exercer sur l'élément déformé une pression engendrée par un vérin, un ballon ou analogue, gonflé au moyen d'un fluide dont la pression est contrôlée. Ce procédé fait en outre intervenir deux gabarits ayant la forme originelle de l'élément déformé qui prennent en sandwich ledit élément déformé. L'un de ces gabarits est placé à l'intérieur de l'élément déformé tandis que l'autre est disposé à l'extérieur de celui-ci.

Il s'avère que dans sa forme d'exécution actuelle, ce procédé est difficilement applicable à toutes les parties d'une carrosserie automobile.

Ceci tient notamment au fait que la structure rigide de la carrosserie ne comprend pas toujours d'éléments sur lesquels les vérins ou les ballons utilisés par ce procédé peuvent prendre appui, à l'opposé de la surface que l'on souhaite redresser.

L'invention a donc plus particulièrement pour but de résoudre ce problème.

A cet effet, elle propose un appareillage suivant les caractéristiques de la revendication 1 et un procédé suivant les caractéristiques de la revendication 24.

De préférence, le susdit actionneur pourra être de type pneumatique et comprendre un vérin pneumatique, un ballon ou soufflet gonflable ou analogue.

L'invention s'applique d'une façon particulièrement avantageuse au redressement de déformations du pavillon (toiture) d'une automobile, en particulier, mais non exclusivement, de déformations dues à la grêle : On sait que lors de certains orages, il se forme des grêlons de dimensions relativement importantes dont les impacts sur une carrosserie provoquent une multiplicité de déformations en forme de cuvettes. Le redressement d'une carrosserie ayant subi un tel dommage est très long et coûteux : Le prix de la réparation peut être supérieur au prix du véhicule, de sorte que bien souvent, le propriétaire renonce à faire réparer sa voiture s'il n'est pas correctement assuré.

L'invention permet de résoudre ce problème grâce à un outillage du type susdit dans lequel par exemple:
- l'élément de support consiste en un cadre extensible comportant deux longerons parallèles, ce cadre étant équipé de moyens d'accrochage et/ou de suspension sur les renforts latéraux du pavillon (toit) du véhicule ;
- l'élément de liaison comprend une traverse mobile en translation sur les deux longerons de l'élément de support ;
- l'élément de contre appui comprend une colonne, de préférence réglable en longueur, sur l'une des extrémités de laquelle peut se fixer ledit actionneur, et comportant, à son autre extrémité, un chariot mobile guidé le long de ladite traverse.

Grâce à cette disposition, le cadre extensible peut être disposé à l'intérieur du véhicule et suspendu sur les renforts latéraux du pavillon, sensiblement parallèlement à celui-ci.

L'élément de contre appui portant l'actionneur équipé d'un gabarit peut être amené au droit de chaque déformation en faisant coulisser la traverse le long des longerons et le chariot le long de la traverse.

L'actionneur est ensuite alimenté en fluide sous pression pour permettre au gabarit de ramener la tôle à sa forme initiale. Ce processus peut être aisément répété pour effectuer le redressement de toutes les déformations présentes sur le pavillon. Compte tenu de la nature des déformations produites par la grêle, ce type de redressement suffit pour ramener le pavillon à sa forme initiale sans avoir à effectuer de traitement supplémentaire. Le coût de la réparation est donc considérablement réduit et devient acceptable, même dans le cas d'un véhicule de valeur peu élevée. Cette solution permet de redresser des éléments impossibles à redresser à l'aide d'outils conventionnels. Bien entendu, elle peut être utilisée pour d'autres parties (notamment verticales) de la carrosserie d'un véhicule.

Selon un autre mode d'exécution de l'invention, l'élément de support pourra comprendre des moyens de fixation à la carrosserie tels qu'une ventouse ou même un aimant permanent (voire même un électroaimant) ainsi qu'une colonne sur laquelle peut coulisser et se verrouiller un chariot sur lequel est articulé un levier muni d'une poignée. Sur ce levier qui constitue le susdit élément de liaison, est monté coulissant un élément de contre appui sur lequel peut venir se fixer un actionneur éventuellement équipé d'un gabarit. Bien entendu, le levier pourra être d'un ordre quelconque.

Eventuellement, l'élément de liaison pourra comprendre deux branches articulées par l'une de leurs extrémités, ces deux branches portant à leurs autres extrémités deux pièces d'appui dont au moins l'une constitue un gabarit, un actionneur étant disposé entre les deux branches de manière à pouvoir les faire pivoter autour de l'axe d'articulation.

Des modes d'exécution de l'invention seront décrits ci-après, à titre d'exemples non limitatifs, avec référence aux dessins annexés dans lesquels :
La figure 1 est une vue en perspective schématique d'un appareillage convenant au redressement des déformations d'un pavillon d'un véhicule ;
Les figures 2 et 3 représentent respectivement en coupe transversale et en élévation une traverse extensible utilisable dans le mode d'exécution illustré figure 1 ;
La figure 4 représente un élément de liaison extensible articulé pouvant se monter sur une structure tubulaire ;
La figure 5 est une variante d'exécution d'un appareillage selon l'invention utilisant un aimant circulaire en tant qu'élément de support ;
La figure 6 est une vue en coupe illustrant le montage d'un actionneur sur un élément de contre appui à rotule ;
La figure 7 représente un appareillage selon l'invention faisant intervenir un levier ;
La figure 8 est une variante d'exécution d'un appareillage qui ne fait pas partie de l'invention spécialement adaptée au redressement des déformations d'une aile de véhicule ;
La figure 9 est une vue de côté montrant un appareillage qui ne fait pas partie de l'invention et faisant intervenir deux leviers articulés l'un à l'autre par l'une de leurs extrémités.

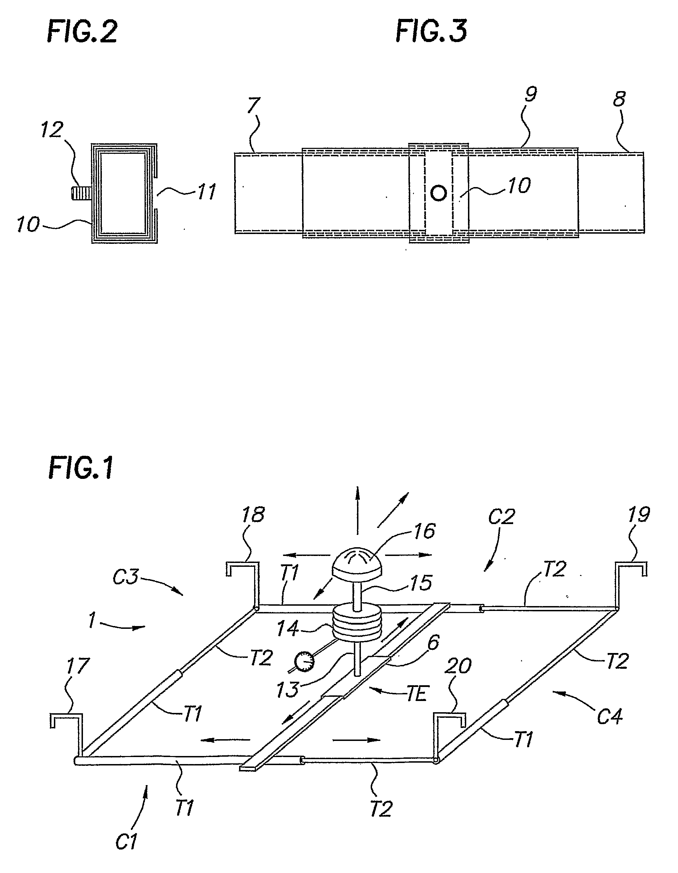

Dans l'exemple illustré sur la figure 1, l'appareillage est plus particulièrement destiné à redresser des déformations produites sur un toit ou pavillon de véhicule par exemple par des impacts de grêlons de dimensions importantes.

Cet appareillage fait intervenir un cadre extensible 1 de forme carrée ou rectangulaire destiné à être disposé à l'intérieur du véhicule, sous le pavillon ou le toit.

Dans cet exemple, les côtés C₁ à C₄ du cadre 1 comprennent chacun deux tronçons T₁, T₂ s'engageant télescopiquement l'un dans l'autre, ces tronçons T₁, T₂ pouvant être tubulaires ou même consister en des profilés de section fermée et/ou ouverte.

Des moyens de verrouillage (non représentés) peuvent être utilisés pour verrouiller les deux tronçons réalisant chaque côté C₁ à C₄ à la longueur souhaitée.

Grâce à ces dispositions, il est donc possible de régler la longueur des côtés C₁ à C₄ et donc de la section du cadre 1 aux dimensions du volume intérieur du véhicule et/ou du pavillon que l'on souhaite redresser.

Sur deux côtés opposés du cadre 1, est montée coulissante une traverse extensible TE sur laquelle coulisse un chariot 6, la longueur de cette traverse s'adaptant aux dimensions du cadre.

Dans l'exemple illustré sur les figures 2 et 3, cette traverse TE comprend deux tronçons tubulaires 7, 8 de section rectangulaire qui s'emboîtent télescopiquement dans un troisième tronçon tubulaire 9, la section extérieure des tronçons 7 et 8 étant légèrement inférieure à la section intérieure du troisième tronçon 9.

Cette traverse peut être amovible et être utilisée indépendamment du cadre pour servir d'appui à un ensemble actionneur/gabarit utilisable dans des emplacements tels que, par exemple, à l'intérieur d'une porte de voiture.

Le chariot consiste, quant à lui, en un tronçon de profilé 10 sensiblement en forme de C délimitant un volume de section légèrement supérieure à la section extérieure du tronçon 9.

Ce tronçon de profilé 10 est muni sur sa face (âme) opposée à son ouverture longitudinale 11, d'une tige filetée 12, axée perpendiculairement au plan du cadre 1, sur laquelle peut venir se fixer une colonne 13 portant un actionneur pneumatique 14 ou même directement l'actionneur pneumatique. La face de l'actionneur 14 opposée à la colonne 13 est elle-même munie d'une tige 15 qui s'étend coaxialement à la colonne 13 et qui supporte un gabarit 16 servant au redressement du pavillon.

La fixation du cadre sur la structure rigide du véhicule est obtenue à l'aide de quatre crochets 17 à 20 respectivement disposés aux quatre angles du cadre 1.

Ces crochets 17 à 20 sont destinés à venir s'introduire dans des perçages ou des rebords présents dans la structure ou réalisés spécialement à cet effet.

Bien entendu, l'invention ne se limite pas à cette disposition : les crochets 17 à 20 pourront être remplacés par des tiges de longueur réglable, des câbles ou même des chaînes. L'accrochage de ces tiges, câbles ou chaînes sur la structure fixe du véhicule peut être réalisé par tout moyen d'accrochage et/ou de fixation connu.

La mise en oeuvre de cet appareillage est particulièrement efficace : Une fois le cadre 1 installé dans le véhicule, l'opérateur peut amener l'ensemble actionneur 14/gabarit 16 en un emplacement approprié (sous une déformation) en déplaçant la traverse extensible TE le long des côtés et le chariot 6 le long de la traverse TE. Après avoir effectué un réglage en hauteur de cet ensemble, il procède à une admission de gaz sous pression, de préférence d'air comprimé, dans l'actionneur 14. Sous l'effet de la pression du gaz, le gabarit 16 vient exercer une poussée sur la déformation jusqu'à ce qu'elle reprenne sa forme initiale.

L'opérateur répète ensuite ces opérations sur les autres déformations jusqu'à ce que le pavillon ou le toit soit totalement redressé.

Eventuellement, la traverse TE pourra être articulée de manière à permettre des modifications de l'orientation de l'actionneur 14 et une meilleure adaptation du gabarit à la forme de la tôle que l'on veut redresser.

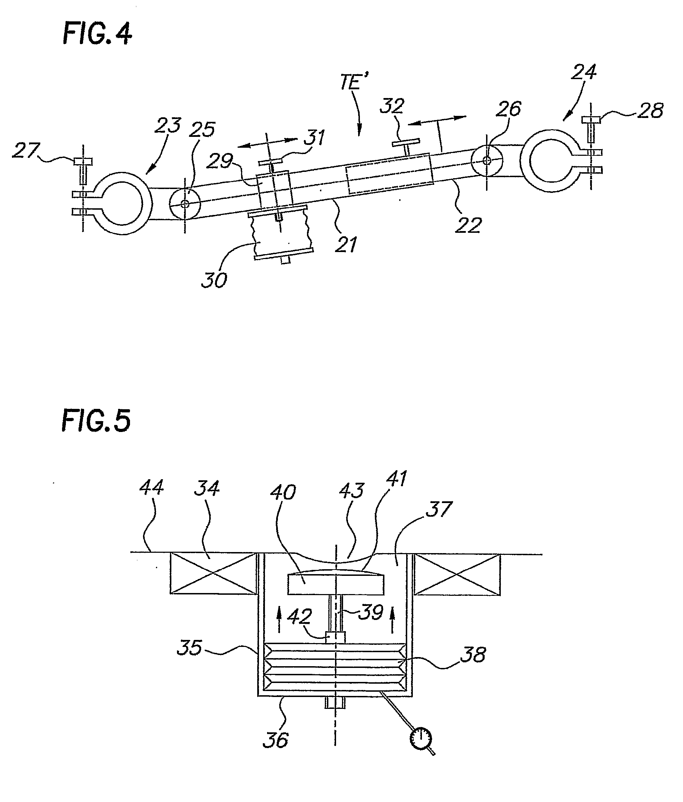

Ainsi, la figure 4 montre une traverse TE' comprenant un élément central formé par emmanchement de deux tronçons tubulaires 21, 22. Les deux extrémités de cet élément central sont reliées à des éléments de guidage et/ou de fixation 23, 24 par l'intermédiaire de deux articulations respectives 25, 26. Ces éléments de guidage et/ou de fixation 23, 24 consistent en un tronçon de profilé de section en forme de U dont les deux extrémités sont munies de perçages dans lesquels s'engagent des vis de serrage 27, 28.

Sur l'élément central est monté coulissant un chariot 29 destiné à porter un actionneur 30, par exemple du type de celui précédemment décrit. Le blocage axial de ce chariot 29 de même que celui des deux tronçons tubulaires est assuré au moyen de vis pointeaux respectives à tête moletée 31, 32.

Les éléments de guidage et/ou de fixation 23, 24 peuvent être montés coulissants sur les deux côtés parallèles d'un cadre 1 du type de celui représenté figure 1 ou même d'un berceau, voire même sur la structure du véhicule. La fixation en position de ces éléments de guidage 23, 24 sur le cadre ou le berceau est obtenue en effectuant un serrage des vis 27, 28.

Dans l'exemple illustré sur la figure 5, l'appareillage se compose d'une structure aimantée annulaire 34 (aimant permanent de forme annulaire ou un ou plusieurs aimants permanents montés sur une structure annulaire). Cet élément annulaire 34 porte un tambour cylindrique coaxial 35 de diamètre extérieur sensiblement égal au diamètre intérieur de la structure annulaire 34. Ce tambour 35 comprend un fond 36 et une ouverture circulaire 37 à l'opposé du fond 36, cette ouverture 37 étant située à hauteur de la face d'application de l'élément annulaire 34.

A l'intérieur du tambour 35 est logé un vérin pneumatique à soufflet 38 prenant appui sur le fond 36 et portant, à l'opposé du fond 36, une tige 39 équipée d'un gabarit 40 de forme circulaire munie d'une face d'appui 41 légèrement bombée.

Le réglage en hauteur du gabarit 40 est obtenu grâce au fait que la tige 39 est filetée dans sa partie inférieure et vient se visser dans un manchon tubulaire taraudé 42 coaxial au vérin 38 et solidaire de la face de celui-ci opposée au fond.

Pour redresser une déformation 43 sur une tôle métallique 44 (ferromagnétique), on applique l'élément annulaire 34 sur la tôle, coaxialement à la déformation 43. Après avoir éventuellement réglé la position du gabarit 40 par un vissage/dévissage de la tige 39 dans le manchon 42, on procède à une admission de gaz sous pression dans le vérin 38. Le gabarit 40 exerce alors sur la déformation 43 un effort tendant à le redresser. Du fait de sa forme bombée, le gabarit 40 va amener la tôle légèrement au-delà de sa position d'origine en créant au sein de la tôle une tension susceptible de déployer d'éventuelles pliures. Lorsque l'admission de fluide sous pression dans le vérin 38 est interrompue, la partie de tôle légèrement bombée (à l'opposé de la déformation initiale), retourne à sa position d'origine, grâce à son élasticité.

Avantageusement, l'appareillage illustré sur la figure 5 pourra venir se monter sur un cadre à l'instar de l'actionneur illustré sur la figure 1.

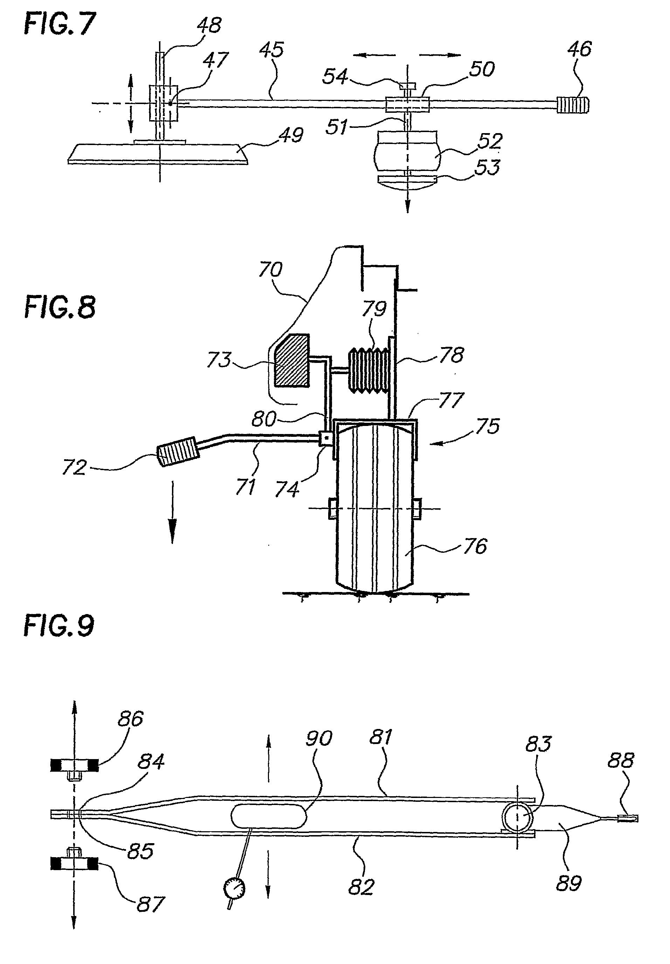

Dans l'exemple représenté sur la figure 7, l'appareillage fait intervenir un levier 45 dont l'une des extrémités porte une poignée 46 tandis que l'autre extrémité est articulée sur un manchon tubulaire 47 monté coulissant sur une tige 48 solidaire, par l'une de ses extrémités, d'une ventouse 49 (voire un aimant ou un électroaimant).

Le long de ce levier 45 est monté coulissant un chariot 50 constitué par un tronçon tubulaire sur lequel peut venir se fixer, par l'intermédiaire d'une colonne de fixation 51, un vérin pneumatique 52 portant un gabarit 53. Le blocage en position du chariot 50 sur le levier 45 est assuré au moyen d'une vis pointeau 54 venant se visser dans un perçage taraudé prévu sur le chariot 50.

Grâce à ces dispositions, en vue de redresser une déformation d'une tôle, on fixe la ventouse 49 sur une portion de tôle pouvant consister, mais non nécessairement, en la tôle portant la déformation.

En faisant coulisser le chariot 50 le long du levier 45 et en faisant éventuellement pivoter ce dernier, on amène le gabarit 53 porté par le vérin 52 contre la déformation. On active alors le vérin 52 de manière à ce que le gabarit exerce un effort sur la déformation jusqu'à l'obtention du redressement recherché. Cet effort est repris par la ventouse 49 et par l'opérateur qui exerce un effort antagoniste sur la poignée 46 du levier 45.

Eventuellement, pour permettre un meilleur réglage de son orientation, l'actionneur utilisé dans les exemples précédemment décrits pourra être monté sur son support (élément de contre appui) par l'intermédiaire d'une liaison à rotule.

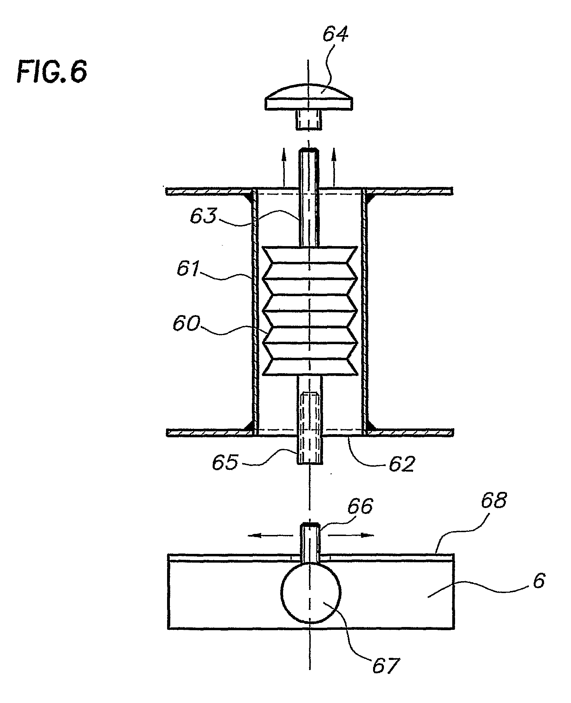

Cette solution est illustrée sur la figure 6 dans laquelle le vérin 60 (de type à soufflet) est monté dans un corps tubulaire 61 au moins partiellement refermé d'un côté par un fond 62 solidaire d'une extrémité du vérin 60. L'autre extrémité du vérin 60 est prolongée par une tige filetée 63 ressortant du corps 61 par un orifice coaxial et sur laquelle peut venir se visser un gabarit 64.

Le fond 62 porte un manchon tubulaire coaxial taraudé 65 dans lequel peut venir se visser la tige 66 d'une rotule 67 assurant une liaison à rotule avec une pièce de support 68, pouvant par exemple consister en un chariot du type de ceux utilisés dans les exemples précédents.

Un avantage de cette solution consiste en ce que l'opérateur peut tenir à la main le corps tubulaire en ayant la main protégée par des collerettes circulaires coaxiales équipant les extrémités dudit corps.

Les appareillages qui vont être décrits en référence aux figures 8 est 9 sont des variantes possibles qui ne font pas partie de l'invention telle que revendiquée.

L'appareillage illustré sur la figure 8 est conçu spécialement pour redresser des déformations produites sur une aile 70 d'une automobile. Il fait intervenir un levier 71 coudé à angle droit portant à l'une de ses extrémités une poignée 72 et à son autre extrémité, un gabarit 73, éventuellement interchangeable (pour s'adapter à la forme à redresser).

Ce levier 71 est articulé au niveau de son coude grâce à une chape 74 sur une pièce d'appui 75 délimitant une concavité, par exemple une pièce de section en C dans laquelle peut venir s'engager étroitement la partie supérieure du pneu 76 du véhicule située au niveau de l'aile 70. L'âme 77 de cette pièce d'appui 75 comprend, à l'opposé du pneu 76, une plaque 78 qui s'étend à angle droit. Sur cette plaque 78 est fixé un actionneur 79, ici un vérin en accordéon, qui agit sur le bras 80 du levier 71 portant le gabarit 73.

Pour redresser la déformation de l'aile 70, l'opérateur dispose tout d'abord la pièce d'appui 75 sur le pneu 76 et l'y fixe, éventuellement dans la position angulaire souhaitée, grâce à des moyens de fixation non représentés. Le vérin 79 est alors rétracté. L'opérateur fait ensuite basculer le levier 71 jusqu'à ce que le gabarit 73 vienne porter sur l'aile 70 dans la région où est située la déformation : L'opérateur commande alors l'activation du vérin 79 en retenant la poignée 72 jusqu'à ce que la partie déformée soit redressée.

Eventuellement, le levier précédemment décrit pourra être utilisé sans le vérin ou même sans la pièce d'appui 75.

Dans l'exemple illustré sur la figure 9, l'appareillage se présente sous la forme d'une pince allongée présentant deux bras 81, 82 articulés l'un à l'autre par une extrémité (articulation 83). Ces deux bras portent à leurs autres extrémités deux moyens de fixation respectifs 84, 85 destinés à recevoir, soit un élément d'appui, soit un gabarit (éléments 86, 87).

Cette pince peut être manipulée grâce à une poignée 88 portée par un troisième bras 89 articulé autour de l'axe de l'articulation 83 des bras 81, 82.

Entre les deux bras 81, 82 est disposé un actionneur pneumatique 90 constitué par un ballon en élastomère raccordé à un circuit d'admission de gaz sous pression.

En raison de sa forme allongée, cet appareillage peut être engagé dans des passages étroits, par exemple entre la tôle de la carrosserie et les raidisseurs associés à cette tôle.

Bien entendu, l'invention ne se limite pas aux modes d'exécution précédemment décrits.

Ainsi, par exemple, l'actionneur pourra comprendre en outre des moyens permettant d'engendrer des vibrations facilitant le retour de la tôle déformée à sa position initiale.

Ces vibrations pourront être obtenues par percussion à fréquence variable.

De même, le gabarit pourra être monté sur l'actionneur par l'intermédiaire d'un dispositif de fixation facilement connectable/déconnectable tel que, par exemple, une fixation à velours et crochet.

En outre, l'élément de support de l'appareillage selon l'invention pourra faire intervenir un coussin en mousse de matière plastique venant en appui sur un élément structural du véhicule. La densité de la mousse (par exemple une mousse de polyuréthane) sera prévue de manière à assurer une transmission des efforts tout en épousant la forme de la pièce d'appui. On obtient alors une meilleure répartition des pressions exercées sur cette pièce d'appui. Par ailleurs, la course de l'actionneur sera raccourcie.

## Revendications

1. Appareillage pour le redressement d'éléments métalliques déformés à la suite d'une contrainte mécanique excessive telle que, par exemple un choc, du type comprenant au moins un élément de support (1) équipé de moyens de fixation temporaires (17 à 20) sur la structure rigide du véhicule et/ou de sa carrosserie, un élément de contre appui sur lequel peut venir se fixer un actionneur pneumatique comprenant un vérin (60), et une liaison mécanique réglable en position et/ou en orientation entre ledit élément de support (1) et ledit élément de contre appui, cet élément de liaison étant conçu de manière à retransmettre sur l'élément de support (1) au moins une fraction de l'effort exercé par l'actionneur sur l'élément de contre appui,
**caractérisé en ce que** ledit appareillage comprend une structure aimantée annulaire (34) portant un tambour cylindrique comprenant un fond (36) et une ouverture circulaire (37) située à l'opposé du fond, à hauteur de la face d'application de l'élément annulaire (34), ce tambour logeant ledit actionneur (38) prenant appui sur ledit fond (36) et portant un gabarit (40) à l'opposé dudit fond, le gabarit étant prévu pour exercer une poussée sur la partie saillante de la déformation (43) des éléments à redresser, et **en ce que** le susdit actionneur comporte un corps tubulaire dont extrémités sont munies de collerettes pouvant être tenu à la main et servant à protéger la main de l'opérateur.

2. Appareillage selon la revendication 1,
**caractérisé en ce que** le susdit actionneur (38) comprend un vérin pneumatique, un ballon ou un soufflet gonflable ou analogue.

3. Appareillage selon l'une des revendications 1 ou 2,
**caractérisé en ce que** le susdit gabarit (40) est monté sur l'actionneur (38) grâce à une tige filetée (39) venant se visser dans un manchon tubulaire taraudé (42) solidaire d'une face de l'actionneur opposée au fond (36).

4. Appareillage selon la revendication 1,
**caractérisé en ce que** :
- l'élément de support consiste en un cadre extensible (1) comportant deux longerons parallèles (C₁, C₂), ce cadre (1) étant équipé de moyens d'accrochage et/ou de suspension (17 à 20) sur les renforts latéraux du pavillon (toit) du véhicule ;
- l'élément de liaison constituant la liaison mécanique réglable comprend une traverse (TE) mobile en translation sur deux tronçons (T₁, T₂) de chaque longeron (C1, C2) de l'élément de support.

5. Appareillage selon la revendication 4,
**caractérisé en ce que** l'élément de contre appui comprend une colonne (13) sur l'une des extrémités de laquelle peut se fixer ledit actionneur (38), et comportant, à son autre extrémité, un chariot mobile (6) guidé le long de ladite traverse (TE).

6. Appareillage selon la revendication 5,
**caractérisé en ce que** la susdite colonne (13) est réglable en longueur.

7. Appareillage selon l'une des revendications 4 à 6,
**caractérisé en ce que** les susdits moyens de fixation temporaires (17 à 20) sont disposés aux quatre angles du susdit cadre (1) et comprennent des crochets, des tiges de longueur réglable, des câbles ou des chaînes aptes à venir s'introduire dans des perçages ou des rebords présents dans la structure rigide du véhicule ou de sa carrosserie.

8. Appareillage selon la revendication 4,
**caractérisé en ce que** les côtés (C₁ à C₄) du cadre (1) comprennent chacun deux tronçons (T₁, T₂) s'engageant télescopiquement l'un dans l'autre, ces tronçons (T₁, T₂) pouvant être tubulaires ou même consister en des profilés de section fermée et/ou ouverte.

9. Appareillage selon la revendication 6,
**caractérisé en ce qu'**il comprend des moyens de verrouillage aptes à verrouiller les deux tronçons (T₁, T₂) réalisant chacun des côtés (C₁ à C₄), à la longueur souhaitée.

10. Appareillage selon la revendication 4,
**caractérisé en ce que** la susdite traverse (TE) comprend deux tronçons tubulaires (7, 8) de section rectangulaire qui s'emboîtent télescopiquement dans un troisième tronçon tubulaire (9), la section extérieure des tronçons (7 et 8) étant légèrement inférieure à la section intérieure du troisième tronçon (9), et **en ce que** le chariot (6) comprend un tronçon de profilé (10) sensiblement en forme de C délimitant un volume de section légèrement supérieure à la section extérieure du tronçon (9).

11. Appareillage selon la revendication 10,
**caractérisé en ce que** le tronçon de profilé (10) formant le susdit chariot (6) est muni sur sa face (âme) opposée à son ouverture longitudinale (11), d'une tige filetée (12), axée perpendiculairement au plan du cadre (1), sur laquelle peut venir se fixer une colonne (13) portant l'actionneur pneumatique (38).

12. Appareillage selon la revendication 4,
**caractérisé en ce que** la susdite traverse (TE) est articulée de manière à permettre des modifications de l'orientation de l'actionneur (38) et une meilleure adaptation du gabarit à la forme de la tôle que l'on veut redresser.

13. Appareillage selon la revendication 12,
**caractérisé en ce que** la susdite traverse comprend un élément central formé par emmanchement de deux tronçons tubulaires (21, 22), les deux extrémités de cet élément central étant reliées à des éléments de guidage et/ou de fixation (23, 24), par l'intermédiaire de deux articulations respectives (25, 26).

14. Appareillage selon la revendication 13,
**caractérisé en ce que** les susdits éléments de guidage et/ou de fixation (23, 24) présentent une forme sensiblement en U dont les deux extrémités sont munies de perçages dans lesquels s'engagent des vis de serrage (27, 28).

15. Appareillage selon la revendication 13,
**caractérisé en ce que** sur l'élément central est monté coulissant un chariot (29) destiné à porter un actionneur (30), le blocage axial de ce chariot (29) ainsi que celui des deux tronçons tubulaires étant assuré au moyen de vis pointeaux respectives à tête moletée (31, 32).

16. Appareillage selon l'une des revendications 4 à 15,
**caractérisé en ce que** la susdite traverse (TE) est amovible et est conçue de manière à pouvoir être utilisée indépendamment du cadre (1).

17. Appareillage selon l'une des revendications précédentes,
**caractérisé en ce que** le susdit gabarit (40) présente une face d'appui (41) légèrement bombée de manière à amener la tôle à redresser au-delà de sa position d'origine.

18. Appareillage selon la revendication 1,
**caractérisé en ce que** l'élément de support (1) comprend des moyens de fixation à la carrosserie, tels qu'une ventouse (49), ou un aimant permanent ou un électroaimant, ces moyens de fixation étant solidaires d'une colonne (48) sur laquelle peut coulisser et se verrouiller un chariot (47) sur lequel est articulé un levier (45) muni d'une poignée (46), et **en ce que** sur ce levier (45), qui constitue le susdit élément de liaison, est monté coulissant un élément de contre appui sur lequel peut venir se fixer un actionneur (52) éventuellement équipé d'un gabarit (53).

19. Appareillage selon l'une des revendications précédentes,
**caractérisé en ce que** le susdit actionneur (60) est monté sur l'élément de contre appui, par l'intermédiaire d'une liaison à rotule (67).

20. Appareillage selon l'une des revendications précédentes,
**caractérisé en ce que** l'actionneur comprend des moyens permettant d'engendrer des vibrations de manière à faciliter le retour de la tôle à sa position initiale.

21. Appareillage selon la revendication 20,
**caractérisé en ce que** les susdites vibrations sont obtenues par percussion à fréquence variable.

22. Appareillage selon l'une des revendications précédentes, **caractérisé en ce que** le gabarit est monté sur l'actionneur par l'intermédiaire d'un dispositif de fixation facilement connectable/déconnectable, telle qu'une fixation à velours et à crochet.

23. Appareillage selon l'une des revendications précédentes, **caractérisé en ce que** l'élément de support comporte un coussin en mousse de matière plastique, conçu pour épouser la forme d'une pièce d'appui et assurer une meilleure répartition des efforts sur cette pièce d'appui.

24. Procédé pour redresser des éléments métalliques d'un véhicule déformés à la suite d'une contrainte mécanique excessive telle qu'un choc, **caractérisé en ce qu'**il comporte les étapes suivantes :
- fournir un appareillage du type comprenant :
- au moins un élément de support(1) équipé de moyens de fixation temporaires (17 à 20) sur la structure rigide du véhicule et/ou de sa carrosserie ;
- un élément de contre appui sur lequel peut venir se fixer un actionneur pneumatique (38) comprenant un vérin (60), et une liaison mécanique réglable en position et/ou en orientation entre ledit élément de support (1) et ledit élément de contre appui, cet élément de liaison étant conçu de manière à retransmettre sur l'élément de support (1) au moins une fraction de l'effort exercé par l'actionneur sur l'élément de contre appui ; et,
- une structure aimantée annulaire (34) portant un tambour cylindrique comprenant un fond (36) et une ouverture circulaire (37) située à l'opposé du fond, à hauteur de la face d'application de l'élément annulaire (34), ce tambour logeant ledit actionneur (38) prenant appui sur ledit fond (36) et portant un gabarit (40) à l'opposé dudit fond, le gabarit étant prévu pour exercer une poussée sur la partie saillante de la déformation (43) des éléments à redresser ;
le susdit actionneur comportant un corps tubulaire dont des extrémités sont munies de collerettes pouvant être tenu à la main et servant à protéger la main de l'opérateur et ledit gabarit (40) ayant une forme légèrement bombée ;
- fixer temporairement l'élément de support (1) sur la structure rigide du véhicule et/ou de sa carrosserie ;
- ajuster la position dudit actionneur pneumatique (38) grâce à ladite liaison mécanique réglable entre ledit élément de support et ledit élément de contre-appui sur lequel est fixé ledit actionneur pneumatique, de façon que ledit gabarit (40) dudit actionneur puisse exercer la poussée sur la partie saillante d'une déformation (43),
- appliquer la structure aimantée annulaire (34) dudit appareillage sur la tôle (44) coaxialement à ladite déformation,
- admettre un gaz sous pression dans ledit vérin (60) dudit actionneur de façon à exercer ladite poussée sur ladite partie saillante.

25. Procédé selon la revendication 24, **caractérisé en ce qu'**il comporte l'étape suivante :
- mettre en action des moyens vibrants dudit actionneur de façon à engendrer des vibrations de manière à faciliter le retour de la tôle à sa position initiale.

## Patentansprüche

1. Vorrichtung zum Geraderichten von Metallelementen, die infolge übermäßiger mechanischer Beanspruchung, wie beispielsweise Schlag, verformt wurden, des Typs umfassend mindestens ein Trägerelement (1), das mit temporären Mitteln zu Befestigung (17-20) an einer starren Struktur des Fahrzeugs und/oder seiner Karosserie ausgestattet ist, ein Gegenlagerelement, auf dem ein pneumatischer Aktor, der einen Zylinder (60) umfasst, befestigt werden kann, und eine positions- und/oder orientierungsregulierbare mechanische Verbindung zwischen dem Trägerelement (1) und dem Gegenlagerelement, wobei dieses Verbindungselement so ausgelegt ist, dass auf das Trägerelement (1) mindestens ein Bruchteil der durch den Aktor auf das Gegenlagerelement ausgeübten Belastung rückübertragen wird,
**dadurch gekennzeichnet, dass** die Vorrichtung eine magnetische Ringstruktur (34) umfasst, die eine zylindrische Trommel trägt, die einen Boden (36) und eine gegenüber dem Boden angeordnete kreisförmige Öffnung (37) entsprechend der Anbringfläche des Ringelements (34) umfasst, wobei diese Trommel den Aktor (38) beherbergt, der auf dem Boden (36) aufsitzt und gegenüber dem Boden einen Formkopf (40) trägt, wobei der Formkopf zum Ausüben eines Stoßes auf den vorspringenden Teil der Verformung (43) des geradezurichtenden Element vorgesehen ist, und dadurch, dass der oben genannte Aktor einen rohrförmigen Korpus umfasst, dessen Enden mit Flanschen versehen sind, die in der Hand gehalten werden können und zum Schutze der Hand des Anwenders dienen.

2. Vorrichtung nach einem der Ansprüche 1 oder 2,
**dadurch gekennzeichnet, dass** der oben genannte Aktor (38) einen pneumatischen Zylinder, einen Ballon oder einen Blasebalg oder Vergleichbares umfasst.

3. Vorrichtung nach Anspruch 1, **dadurch gekennzeichnet, dass**
der oben genannte Formkopf (40) auf dem Aktor (38) mit einem Gewindeschaft (39) montiert ist, der in eine Gewindemuffe (42) geschraubt ist, die mit einer dem Boden (36) gegenüberliegenden Fläche des Aktors fest verbunden ist.

4. Vorrichtung nach Anspruch 1,
**dadurch gekennzeichnet, dass**
- das Trägerelement aus einem ausziehbaren Rahmen (1) besteht, umfassend zwei parallele Längsträger (C₁, C₂), wobei dieser Rahmen (1) mit Kopplungs- und/oder Aufhängemitteln (17-20) an die seitlichen Verstärkungen des Verdecks (Dachs) des Fahrzeugs ausgestattet ist;
- das Bindungselement, das die regulierbare mechanische Bindung darstellt, eine auf zwei Abschnitten (T₁, T₂) von jedem Längsträger (C₁, C₂) des Trägerelements translatorisch bewegliche Querstrebe (TE) umfasst.

5. Vorrichtung nach Anspruch 4,
**dadurch gekennzeichnet, dass** das Gegenlagerelement eine Säule (13) umfasst, an deren einem Ende der Aktor (38) befestigt werden kann, und die an ihrem anderen Ende einen beweglichen, entlang der Querstrebe (TE) geführten Schlitten (6) umfasst.

6. Vorrichtung nach Anspruch 5,
**dadurch gekennzeichnet, dass** die Säule (13) längsregulierbar ist.

7. Vorrichtung nach Anspruch 4 bis 6,
**dadurch gekennzeichnet, dass** die oben genannten temporären Befestigungsmittel (17-20) an den vier Ecken des oben genannten Rahmens (1) angeordnet sind und Haken, längenregulierbare Schäfte, Kabel oder Ketten umfassen, die dazu geeignet sind, in Bohrungen oder Randabschlüsse einzugreifen, die in der starren Struktur des Fahrzeugs oder in seiner Karosserie vorhanden sind.

8. Vorrichtung nach Anspruch 4,
**dadurch gekennzeichnet, dass** die Seiten (C₁-C₄) des Rahmens (1) jeweils zwei Teilstücke (T₁, T₂) umfassen, die teleskopartig ineinandergreifen, wobei diese Teilstücke rohrförmig sein können oder auch aus Profilen mit geschlossenem und/offenem Querschnitt bestehen können.

9. Vorrichtung nach Anspruch 6,
**dadurch gekennzeichnet, dass** sie Arretiermittel umfasst, die zum Arretieren der beiden Teilstücke (T₁, T₂), die jeweils Seiten (C₁-C₄) realisieren, bei gewünschter Länge. geeignet sind.

10. Vorrichtung nach Anspruch 4,
**dadurch gekennzeichnet, dass** die oben genannte Querstrebe (TE) zwei rohrförmige Teilstücke (7, 8) mit rechteckigem Querschnitt umfasst, die in einem dritten rohrförmigen Teilstück (9) teleskopartig verschachtelt sind, wobei der äußere Querschnitt der Teilstücke (7 und 8) etwas kleiner ist als der innere Querschnitt des dritten Teilabschnitts (9), und dadurch, dass der Schlitten (6) einen Profilabschnitt (10) in Wesentlichen in C-Form umfasst, der ein Querschnittsvolumen begrenzt, das etwas größer ist als der äußere Querschnitt des Teilabschnitts (9).

11. Vorrichtung nach Anspruch 10,
**dadurch gekennzeichnet, dass** der Profilabschnitt (10), der den oben genannten Schlitten ausbildet, auf seiner Fläche (Kern) gegenüber seiner Längsöffnung (11) mit einem senkrecht zur Ebene des Rahmens (1) geachsten Gewindeschaft (12) versehen ist, auf dem eine Säule (13) befestigt werden kann, die den pneumatischen Aktor (38) trägt.

12. Vorrichtung nach Anspruch 4,
**dadurch gekennzeichnet, dass** die oben genannte Querstrebe (TE) in einer Weise gelenkig gelagert ist, dass Änderungen in der Ausrichtung des Aktors (38) und eine bessere Anpassung des Formkopfs an die Form des Blechs, dessen Geraderichten gewünscht ist, ermöglicht werden.

13. Vorrichtung nach Anspruch 12,
**dadurch gekennzeichnet, dass** die oben genannte Querstrebe ein mittiges Element umfasst, das durch Aufstecken von zwei rohrförmigen Teilstücken (21, 22) ausgebildet ist, wobei die beiden Enden dieses mittigen Elements über jeweils zwei Gelenke (25, 26) mit Führungs- und/oder Befestigungselementen (23, 24) verbunden sind.

14. Vorrichtung nach Anspruch 13,
**dadurch gekennzeichnet, dass** die oben genannten Führungs- und/oder Befestigungselemente (23, 24) im Wesentlichen eine U-Form aufweisen, deren beide Enden mit Bohrungen versehen sind, in die Feststellschrauben (27, 28) eingreifen.

15. Vorrichtung nach Anspruch 13,
**dadurch gekennzeichnet, dass** auf dem mittigen Element ein Schlitten (29) gleitend montiert ist, der dazu bestimmt ist, einen Aktor (30) zu tragen, wobei die axiale Blockierung dieses Schlittens (29) wie auch diejenige der beiden rohrförmigen Abschnitte jeweils mittels Stellschrauben mit Rändelkopf (31, 32) sichergestellt ist.

16. Vorrichtung nach einem der Ansprüche 4 bis 15,
**dadurch gekennzeichnet, dass** die oben genannte Querstrebe (TE) abnehmbar ist und so ausgelegt ist, dass sie unabhängig vom Rahmen (1) verwendet werden kann.

17. Vorrichtung nach einem der vorhergehenden Ansprüche,
**dadurch gekennzeichnet, dass** der oben genannte Formkopf (40) eine Auflagefläche (41) aufweist, die leicht gewölbt ist, derart, dass das geradezurichtende Blech über seine Urprungsposition hinaus gebracht wird.

18. Vorrichtung nach Anspruch 1,
**dadurch gekennzeichnet, dass** das Trägerelement (1) Befestigungsmittel an der Karosserie, wie eine Ansaugplatte (49) oder einen Permanentmagneten oder einen Elelctromagneten, umfasst, wobei diese Befestigungsmittel mit einer Säule (48) fest verbunden sind, auf der ein Schlitten (47), an dem ein mit einem Knauf (46) versehener Hebel (45) gelenkig befestigt ist, gleiten und arretiert werden kann, und dadurch, dass an diesem Hebel (45), der das oben genannte Verbindungselement aufbaut, ein Gegenlagerelement gleitend montiert ist, auf dem ein Aktor (52) befestigt werden kann, der gegebenenfalls mit einem Formkopf (53) ausgestattet sein kann.

19. Vorrichtung nach einem der vorhergehenden Ansprüche,
**dadurch gekennzeichnet, dass** der oben genannte Aktor (60) auf dem Gegenlagerelement (60) über eine Kugel/Pfanne-Verbindung (67) befestigt ist.

20. Vorrichtung nach einem der vorhergehenden Ansprüche,
**dadurch gekennzeichnet, dass** der Aktor Mittel umfasst, durch die sich Schwingungen so erzeugen lassen, dass die Rückkehr des Blechs in seine Anfangsposition erleichtert wird.

21. Vorrichtung nach Anspruch 20,
**dadurch gekennzeichnet, dass** die oben genannten Schwingungen durch Klopfen mit variabler Frequenz erhalten werden.

22. Vorrichtung nach einem der vorhergehenden Ansprüche,
**dadurch gekennzeichnet, dass** der Formkopf auf dem Aktor über eine leicht verbindbare/lösbare Befestigungsvorrichtung, wie eine Klettverschluss-Befestigung, befestigt ist.

23. Vorrichtung nach einem der vorhergehenden Ansprüche, **dadurch gekennzeichnet, dass** das Trägerelement ein Kunststoffschaumkissen umfasst, das dazu ausgelegt ist, sich an die Form eines Stützelements anzupassen und eine bessere Verteilung der Belastungen auf dieses Stützelement sicherzustellen.

24. Verfahren zum Geraderichten von infolge einer übermäßigen mechanischen Beanspruchung, wie ein Schlag, verformten metallischen Elementen eines Fahrzeugs, **dadurch gekennzeichnet, dass** es die folgenden Schritte umfasst:
- Bereitstellen einer Vorrichtung des Typs, der folgendes umfasst:
- mindestens ein Trägerelement (1), das mit temporären Mitteln zur Befestigung (17-20) an der starren Struktur des Fahrzeugs und/oder seiner Karosserie ausgestattet ist;
- ein Gegenlagerelement, auf dem ein pneumatischer Aktor (38), der einen Zylinder (60) umfasst, befestigt werden kann, und eine positions- und/oder orientierungsregulierbare mechanische Verbindung zwischen dem Trägerelement (1) und dem Gegenlagerelement, wobei dieses Verbindungselement so ausgelegt ist, dass auf das Trägerelement (1) mindestens ein Bruchteil der durch den Aktor auf das Gegenlagerelement ausgeübten Belastung rückübertragen wird; und
- eine magnetische Ringstruktur (34), die eine zylindrische Trommel trägt, die einen Boden (36) und eine gegenüber dem Boden angeordnete kreisförmige Öffnung (37) entsprechend der Anbringfläche des Ringelements (34) umfasst, wobei diese Trommel den Aktor (38) beherbergt, der auf dem Boden (36) aufsitzt und gegenüber dem Boden einen Formkopf (40) trägt, wobei der Formkopf zum Ausüben eines Stoßes auf den vorspringenden Teil der Verformung (43) der geradezurichtenden Elemente vorgesehen ist, wobei der oben genannte Aktor einen rohrförmigen Korpus umfasst, dessen Enden mit Flanschen versehen sind, der von Hand gehalten werden kann und zum Schutze der Hand des Anwenders und des Formkopfes (40) mit leicht gewölbter Form dient;
- temporäres Befestigen des Trägerelements (1) an der starren Struktur des Fahrzeugs und/oder seiner Karosserie;
- Einstellen der Position des pneumatischen Aktors (38) anhand der regulierbaren mechanischen Verbindung zwischen dem Trägerelement und dem Gegenlagerelement, an dem der pneumatische Aktor befestigt ist, derart, dass der Formkopf (40) des Aktors den Druck auf den vorspringenden Teil einer Verformung (43) ausüben kann,
- koaxiales Anbringen der magnetischen Ringstruktur (34) der Vorrichtung auf das Blech (44) an der Verformung,
- Zuführen eines Druckgases in den Zylinder (60) des Aktors derart, dass der Druck auf den vorspringenden Teil ausgeübt wird,

25. Verfahren nach Anspruch 24, **dadurch gekennzeichnet, dass** es den folgenden Schritt umfasst:
- Betätigen von Schwingungsmitteln des Aktors derart, dass Schwingungen so erzeugt werden, dass die Rückkehr des Blechs in seinen Ausgangsposition erleichtert wird.

## Claims

1. Apparatus for straightening metal elements deformed following an excessive mechanical stress such as, for example, an impact, of the type comprising at least one support element (1) equipped with means (17 to 20) for temporary fixing to the rigid structure of the vehicle and/or its bodywork, a counter-support element to which a pneumatic actuator comprising a jack (60) can be fixed, and a mechanical connection adjustable for position and/or orientation between said support element (1) and said counter-support element, this connecting element being designed so as to retransmit to the support element (1) at least a fraction of the force exerted by the actuator on the counter-support element,
**characterised in that** said apparatus comprises an annular magnetised structure (34) carrying a cylindrical drum comprising a bottom (36) and a circular opening (37) situated opposite the bottom, level with the application face of the annular element (34), this drum housing said actuator (38) bearing on said bottom (36) and carrying a tool (40) opposite said bottom, the tool being designed to exert a thrust on the projecting part of the deformation (43) of the elements to be straightened, and **in that** the aforementioned actuator comprises a tubular body, ends of which are provided with collars that can be held in the hand and serve to protect the hand of the operator.

2. Apparatus according to claim 1, **characterised in that** the aforementioned actuator (38) comprises a pneumatic jack, a balloon or an inflatable bellows or the like.

3. Apparatus according to one of claims 1 or 2, **characterised in that** the aforementioned tool (40) is mounted on the actuator (38) by means of a threaded rod (39) screwed into a tapped tubular sleeve (42) fixed to a face of the actuator opposite to the bottom (36).

4. Apparatus according to claim 1, **characterised in that**:
- the support element consists of an extensible frame (1) comprising two parallel longitudinal members (C₁, C₂), this frame (1) being equipped with means (17 to 20) for attachment and/or suspension on the lateral reinforcements of the top (roof) of the vehicle;
- the connecting element constituting the adjustable mechanical connection comprises a crossmember (TE) able to move in translation on two portions (T₁, T₂) of each longitudinal member (C₁, C₂) of the support element.

5. Apparatus according to claim 4, **characterised in that** the counter-support element comprises a column (13) on one of the ends of which said actuator (38) can be fixed, and comprising, at its other end, a movable carriage (6) guided along said crossmember (TE).

6. Apparatus according to claim 5, **characterised in that** the aforementioned column (13) is adjustable for length.

7. Apparatus according to one of claims 4 to 6, **characterised in that** the aforementioned temporary fixing means (17 to 20) are disposed at the four corners of the aforementioned frame (1) and comprise hooks, rods of adjustable length, cables or chains able to be inserted in piercings or rims present in the rigid structure of the vehicle or its bodywork.

8. Apparatus according to claim 4, **characterised in that** the sides (C₁ to C₄) of the frame (1) each comprise two portions (T₁, T₂) engaging telescopically in each other, these portions (T₁, T₂) being able to be tubular or even consist of profiles with a closed and/or open cross section.

9. Apparatus according to claim 6, **characterised in that** it comprises locking means able to lock the two portions (T₁, T₂) producing each of the sides (C₁ to C₄), to the required length.

10. Apparatus according to claim 4, **characterised in that** the aforementioned crossmember (TE) comprises two tubular portions (7, 8) with a rectangular cross section that fit telescopically in a third tubular portion (9), the external cross section of the portions (7 and 8) being slightly less than the internal cross section of the third portion (9), and **in that** the carriage (6) comprises a profile portion (10) substantially in the form of a C delimiting a volume with a cross section slightly greater than the external cross section of the portion (9).

11. Apparatus according to claim 10, **characterised in that** the profile portion (10) forming the aforementioned carriage (6) is provided, on its face (web) opposite to its longitudinal opening (11), with a threaded rod (12), aligned perpendicularly to the plane of the frame (1), on which a column (13) carrying the pneumatic actuator (38) can be fixed.

12. Apparatus according to claim 4, **characterised in that** the aforementioned cross member (TE) is articulated so as to allow changes to the orientation of the actuator (38) and better adaptation of the tool to the shape of the metal sheet that it is wished to straighten.

13. Apparatus according to claim 12, **characterised in that** the aforementioned cross member comprises a central element formed by fitting two tubular portions (21, 22), the two ends of this central element being connected to guidance and/or fixing elements (23, 24), by means of two respective articulations (25, 26).

14. Apparatus according to claim 13, **characterised in that** the aforementioned guidance and/or fixing elements (23, 24) have an approximately U shape, the two ends of which are provided with piercings in which clamping screws (27, 28) engage.

15. Apparatus according to claim 13, **characterised in that** a carriage (29) intended to carry an actuator (30) is mounted slidably on the central element, the axial locking of this carriage (29) and that of the two tubular potions being provided by means of respective locking screws (31, 32) with a knurled head.

16. Apparatus according to one of claims 4 to 15, **characterised in that** the aforementioned cross member (TE) is removable and is designed so as to be able to be used independently of the frame (1).

17. Apparatus according to one of the preceding claims, **characterised in that** the aforementioned tool (40) has a slightly arched bearing face (41) so as to bring the metal sheet to be straightened beyond its original position.

18. Apparatus according to claim 1, **characterised in that** the support element (1) comprises means for fixing to the bodywork, such as a sucker (49), or a permanent magnet or an electromagnetic, these fixing means being secured to a column (48) on which there can slide and lock a carriage (47) on which a lever (45) provided with a handle (46) is articulated, and **in that**, on this lever (45), which constitutes the aforementioned connecting element, there is slidably mounted a counter-support element on which an actuator (52) optionally equipped with a tool (53) can be fixed.

19. Apparatus according to one of the preceding claims, **characterised in that** the aforementioned actuator (60) is mounted on the counter-support element, by means of a swivel connection (67).

20. Apparatus according to one of the preceding claims, **characterised in that** the actuator comprises means for generating vibrations so as to facilitate the return of the metal sheet to its initial position.

21. Apparatus according to claim 20, **characterised in that** the aforementioned vibrations are obtained by percussion at variable frequency.

22. Apparatus according to one of the preceding claims, **characterised in that** the tool is mounted on the actuator by means of an easily connectable/disconnectable fixing device, such as a fixing of the hook and loop type.

23. Apparatus according to one of the preceding claims, **characterised in that** the support element comprises a cushion made from foamed plastic, designed to match the shape of a support piece and to provide better distribution of the forces on this support piece.

24. Method for straightening metal elements of a vehicle deformed following an excessive mechanical stress such as an impact, **characterised in that** it comprises the following steps:
- providing an apparatus of the type comprising:
- at least one support element (1) equipped with means for temporary fixing (17 to 20) to the rigid structure of the vehicle and/or its bodywork;
- a counter-support element to which a pneumatic actuator (38) comprising a jack (60) can be fixed, and a mechanical connection adjustable for position and/or orientation between said support element (1) and said counter-support element, this connecting element being designed so as to retransmit to the support element (1) at least a fraction of the force exerted by the actuator on the counter-support element; and
- an annular magnetised structure (34) carrying a cylindrical drum comprising a bottom (36) and a circular opening (37) situated opposite the bottom, level with the application face of the annular element (34), this drum housing said actuator (38) bearing on said bottom (36) and carrying a tool (40) opposite said bottom, the tool being designed to exert a thrust on the projecting part of the deformation (43) of the elements to be straightened;
the aforementioned actuator comprising a tubular body, ends of which are provided with collars that can be held in the hand and serve to protect the hand of the operator and said tool (40) having a slightly arched shape;
- temporarily fixing the support element (1) on the rigid structure of the vehicle and/or its bodywork;
- adjusting the position of said pneumatic actuator (38) by means of said adjustable mechanical connection between said support element and said counter-support element on which said pneumatic actuator is fixed, so that said tool (40) of said actuator can exert the thrust on the projecting part of a deformation (43),
- applying the annular magnetised structure (34) of said apparatus to the metal sheet (44) coaxially with said deformation,
- admitting a pressurised gas into said jack (60) of said actuator so as to exert said thrust on said projecting part.

25. Method according to claim 24, **characterised in that** it comprises the following step:
- actuating vibrating means of said actuator so as to generate vibrations so as to facilitate the return of the metal sheet to its initial position.
